# EUROPEAN PATENT APPLICATION

(11) **EP 1 793 555 A1**
(43) Date of publication of application: **06.06.2007**
(21) Application number: 06024768.1
(22) Date of filing: 30.11.2006
(51) Int. Cl.: H04L 29/06

(54) **Faster than real time streaming in a playlist context**

(30) Priority: 02.12.2005 US 741716 P; 20.11.2006 US 561529
(71) Applicant: Alcatel Lucent, 75008 Paris (FR)
(72) Inventor: Severa, Mike, 91106 Pasadena (US); Foster, Michael, CA 92130 San Diego (US); Wei, Wu, CA 92129 San Diego (US); Kosiba, David, CA 91935 Jamul (US); Paranjape, Uma, CA 92129 San Diego (US)
(74) Representative: Dreiss, Fuhlendorf, Steimle & Becker

(57) **Abstract**

A method for facilitating multimedia streaming using server-side playlists comprises a plurality of operations. An operation is performed for streaming current playlist selection data from a server that supports server-side playlists to a client having a jitter buffer. An operation is performed for receiving at the server a request for streaming multimedia content corresponding to a different playlist selection. An operation is performed for communicating client-server specification information between the server and the client for enabling the different playlist selection data to be streamed from the server to the client at a data transfer rate greater than a maximum data presentation rate. The operation for communicating client-server specification information includes transmitting from the server for reception by the client information acknowledging that the server supports faster than real-time streaming and receiving at the server information designating a current size of the jitter buffer and a maximum data rate at which data is receivable by the client. The server performs an operation for streaming the different playlist selection data from the server for reception by the client after the operation for communicating client-server specification information is performed. The different playlist selection data is streamed at a data transfer rate greater than the maximum data transfer rate at which data is outputable from the jitter buffer.

## Description

### CROSS REFERENCE TO RELATED APPLICATIONS

This patent application claims priority to co-pending United States Provisional Patent Application having Serial No. 60/741,716, filed 12/02/2005, entitled "Faster Than Real Time Streaming In A Playlist Context", having a common applicant herewith and being incorporated herein in its entirety by reference.

### FIELD OF THE DISCLOSURE

The disclosures made herein relate generally to streaming content over a network connection and, more particularly, to implementation of server-side playlists for facilitating such streaming.

### BACKGROUND

Normally, when a client that is not using playlists to stream content clips wants to stop streaming one content clip and start streaming another, it uses standard a streaming protocol (for example, Real Time Streaming Protocol (RTSP)) to shutdown the current streaming session and begin a new one. This process of shutting down the current streaming session and beginning the new one involves a number of request-response iterations between the client and the server from which such content clips are being streamed. On many network types and a wireless network, in particular, such iterations can each take as much as a second or more. Conventional playlist solutions (e.g., server-side playlists) are specifically configured for addressing one aspect of this delay by using a single session to stream multiple clips.

However, a delay that is not addressed by conventional playlist solutions arises from the amount of time it takes from when a client makes a request for receiving a different content clip and when the client can begin presenting the content clip to the end-user (i.e., outputting the content clip audibly and/or visually). A significant portion of this delay results from use of a jitter buffer. The main objective of a jitter buffer is to mimimize the affect on playback of variation (i.e., jitter) in the transfer rate of the arriving content data. For example, if each piece of content data is decoded as it arrives and the corresponding content is thereafter immediately presented to the end-user and if one future piece of content data arrives late, presentation of the corresponding data to the end-user will have to be delayed until that tardy content data arrives and can be decoded. A jitter buffer allows the client to continually extract and decode content data and to present a corresponding content clip to an end user under the assumption that over a given window, small variations in arrival data transfer rate of content data will be averaged out in that the network will provide some content data to the client too slowly for some period of time and will provide some content data to the client too quickly for some amount of time.

One of the scenarios in which jitter buffering can cause a delay is in the context of playlists. For example, when a client requests that it wants a next content clip in a playlist to be sent to it, the client will still have some content data left over from the previous clip (i.e., residual content data) because of the presence of the jitter buffer. In order to deal with this jitter buffer induced delay in the context of playlists, a client can discard that residual content data and simply start using content data for the next content clip. However, the standard streaming behavior of a client is to stream content data at a data transfer rate that is consistent with the presentation rate for the corresponding content clip. If this is done, the client must wait until the jitter buffer is full before it can begin decoding and presenting the content clip to the end user (i.e., it must first fill the jitter buffer with content data for that next content clip). Outside of the context of playlists, an approach for reducing this particular type of delay is for a server to transmit the data at a faster than real-time streaming data rate. However, while transmitting data at a faster than real-time streaming data rate is a common approach outside from the context of playlists, it is not a known approach for addressing such delays in the context of playlists and non-conventional exchange of information must be performed between the client and server in order for this faster than real time streaming of content data to happen correctly in the context of playlists.

Therefore, an approach for transmitting content data at a faster than real-time streaming data rate in the context of presenting content clips via a playlist would be advantageous, desirable and useful.

### SUMMARY OF THE DISCLOSURE

Embodiment of the present invention relate to approaches to reducing delay associated with filling a jitter buffer after the jitter buffer has been flushed of data corresponding to a current playlist selection in anticipation of receiving data corresponding to a new playlist selection. More specifically, the present invention provides for transmitting playlist selection data from a server to a client at a faster than real-time streaming data transfer rate. In support of such faster than real-time streaming of data, the present invention provides for communication of information between the server and client necessary for such faster than real time streaming to be carried out correctly. A skilled person will appreciate that embodiments of the present invention are applicable and useful for live streaming content, video on demand content and the like.

In one embodiment of the present invention, a method for facilitating multimedia streaming using playlists comprises a plurality of operations. An operation is performed for streaming data corresponding to a current playlist selection from a server that supports server-side playlists to a client having a jitter buffer. An operation is performed for receiving at the server a request for streaming multimedia content corresponding to a different playlist selection to the client. An operation is performed for communicating client-server specification information between the server and the client for enabling the data corresponding to the different playlist selection to be streamed from the server to the client at a data transfer rate greater than a maximum data presentation rate. The operation for communicating client-server specification information includes transmitting from the server for reception by the client information acknowledging that the server supports faster than real-time streaming and receiving at the server information designating a current size of the jitter buffer and a maximum data rate at which data is receivable by the client. The server performs an operation for streaming the data corresponding to the different playlist selection to the client after the operation for communicating client-server specification information is performed. The data corresponding to the different playlist selection is streamed at a data transfer rate greater than the maximum data transfer rate at which data is outputable from the jitter buffer.

In another embodiment of the present invention, a method for facilitating multimedia streaming using playlists comprises a plurality of operations. An operation is performed for streaming data corresponding to a current playlist selection from a server that supports server-side playlists for reception by a client. An operation is performed for storing the data corresponding to a current playlist selection within a jitter buffer of the client in response the client receiving the data corresponding to a current playlist selection. The client performs an operation for transmitting a request for streaming multimedia content corresponding to a different playlist selection. An operation is performed for transmitting from the server for reception by the client information acknowledging that the server supports faster than real-time streaming after the request for streaming multimedia content corresponding to the different playlist selection is received by the server. An operation is performed for transmitting from the client for reception by the server information designating a current size of the jitter buffer, a maximum data presentation rate at which data is receivable by the client and acknowledgment that the client desires data to be streamed at a faster than real-time streaming data rate. The information transmitted from the client is transmitted in response to the information acknowledging that the server supports faster than real-time streaming being received by the client. An operation is performed for streaming from the server for reception by the client the data corresponding to the different playlist selection in response to the information transmitted from the client being received by the server. Streaming of data corresponding to the different playlist selection is performed at a data transfer rate greater than the maximum data transfer rate at which data is outputable from the jitter buffer.

In another embodiment of the present invention, a server that supports server-side playlists comprises one or more data processing devices, instructions processable by the one or more data processing devices and an apparatus from which the instructions are accessible by the one or more data processing devices. The instructions are configured for enabling the one or more data processing devices to facilitate a plurality of operations. An operation is performed for streaming data corresponding to a current playlist selection from a server that supports server-side playlists to a client having a jitter buffer. An operation is performed for receiving at the server a request for streaming multimedia content corresponding to a different playlist selection to the client. An operation is performed for communicating client-server specification information between the server and the client for enabling the data corresponding to the different playlist selection to be streamed from the server to the client at a data transfer rate greater than a maximum data presentation rate. The operation for communicating client-server specification information includes transmitting from the server for reception by the client information acknowledging that the server supports faster than real-time streaming and receiving at the server information designating a current size of the jitter buffer and a maximum data rate at which data is receivable by the client. The server performs an operation for streaming the data corresponding to the different playlist selection to the client after the operation for communicating client-server specification information is performed. The data corresponding to the different playlist selection is streamed at a data transfer rate greater than the maximum data transfer rate at which data is outputable from the jitter buffer.

Turning now to specific aspects of the present invention, in at least one embodiment, an operation is performed for transmitting a command causing the client to flush data corresponding to a current playlist selection from the jitter buffer.

In at least one embodiment of the present invention, the command causing the client to flush data corresponding to a current playlist selection is transmitted after the server receives the request for streaming multimedia content corresponding to a different playlist selection.

In at least one embodiment of the present invention, the current size of the jitter buffer corresponds to the jitter buffer being empty.

In at least one embodiment of the present invention, a target data transfer rate at which the streaming data corresponding to the different playlist selection is performed is equal to the maximum data rate at which data is receivable by the client or at which a network over which data is transmitted to the client can transmit such data.

In at least one embodiment of the present invention, an operation is performed for receiving at the server information designating that the client desires data to be streamed at a faster than real-time data rate.

In at least one embodiment of the present invention, the operation for receiving the information designating that the client desires data to be streamed at a faster than real-time data rate is performed prior to the streaming data corresponding to the different playlist selection being performed.

These and other objects, embodiments, advantages and/or distinctions of the present invention will become readily apparent upon further review of the following specification, associated drawings and appended claims.

### BRIEF DESCRIPTION OF THE DRAWINGS

FIG. 1 shows an embodiment of information exchange conducted between a server and client in accordance with 3GPP (3rd Generation Partnership Project) PSS (Packet Switched Streaming) release 6 mechanisms.
FIG. 2 shows an embodiment of information exchange conducted between a server and client in accordance with 3GPP PSS release 6 mechanisms in combination with Packet Video Network Solutions (pvNS) playlist protocol extensions.
FIG. 3 shows an embodiment of a method for facilitating multimedia streaming using playlists in accordance with the present invention.

### DETAILED DESCRIPTION OF THE DRAWING FIGURES

Faster than real time data rate is defined herein to be a data rate in excess of a maximum data rate at which data can be presented by the client. For any client-server system in which faster than real time streaming happens, certain information must be exchanged between the client and server. There are many approaches to exchanging such information, two of which are disclosed herein. A first one of these approaches is to use 3GPP (3rd Generation Partnership Project) PSS (Packet Switched Streaming) release 6 standardized signalling mechanisms. A second one of these approaches is to use specific mechanisms added to a server-side playlist protocol. In one specific example, the server-side playlist protocol is a Packet Video Network Solutions (pvNS) server-side playlist protocol. It is disclosed herein that some 3GPP PSS release 6 mechanisms may also be used in this latter approach as well.

Table 1 discloses examples of information needed to be exchanged between a client and a server to allow faster than real time streaming to be carried out effectively. The information in Table 1 also draws attention to the approach or approaches used for facilitating exchange of specific information (i.e., purely 3GPP PSS release 6 mechanisms or mechanisms including additions to a server-side playlist protocol).

**TABLE 1**

| | |
|---|---|
| Sever => Client: "I support faster than real time streaming" | Feature tag if relying on RTSP (RTSP header extension) |
| | Not necessarily needed if using PLAYLIST_PLAY or SET_PARAMETER |
| Client => Server: buffer size | RTSP release 6 setup |
| Client => Server: max bandwidth (server configuration) | RTSP release 6 setup or server config |
| Client => Server: "Willing to flush buffer" or "willing to accept faster than real time data" | Server assumes buffer is empty only via PLAYLIST_PLAY or SET_PARAMETER |
| | NADU 0 buffer packet (RTCP release 6 adaptation) |
| | Playlist_play header (Playlist protocol extension) |
| | SET_PARAMETER header (playlist protocol extension) |
| Client => Server: preference of time or quality (i.e., session level or request level) | playlist protocol extension |
| | RTSP "Speed" and "Scale" headers |
| level or request level) | |
| Time: decimation allowed, transmit bitrate stays constant | |
| Quality: decimation not allowed, transmit bitrate increases | |
| Some combination in which both bitrate and quality change | |
| Server => client "ok to flush buffer" or "I will send faster than real-time" | playlist protocol extension |
| Server => client streaming rate (optional) | playlist protocol extension |

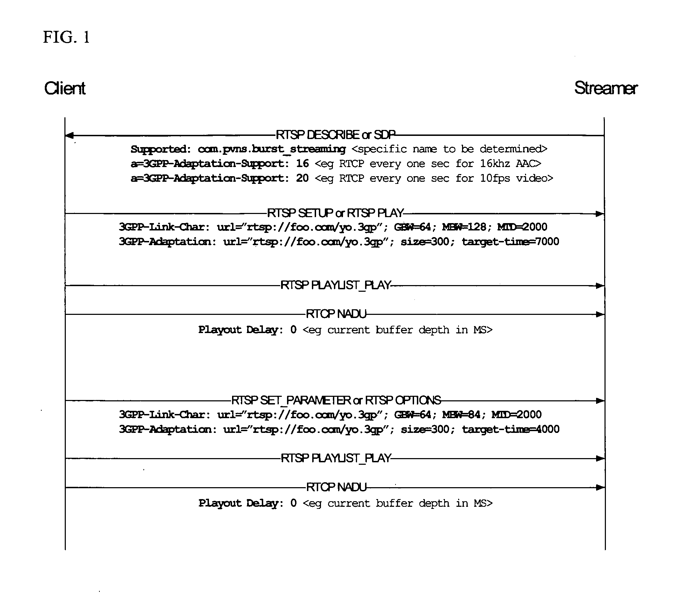

FIG. 1 shows an embodiment of information exchange conducted between a server and client in accordance with 3GPP PSS release 6 mechanisms, which is exchanged for the purpose of enabling data corresponding to a playlist selection to be streamed at a faster than real time streaming data rate. The text in bold letters shows actual information communicated between the client and the server. The text in "< >" markers provides explanatory information regarding the actual information communicated between the client and the server.

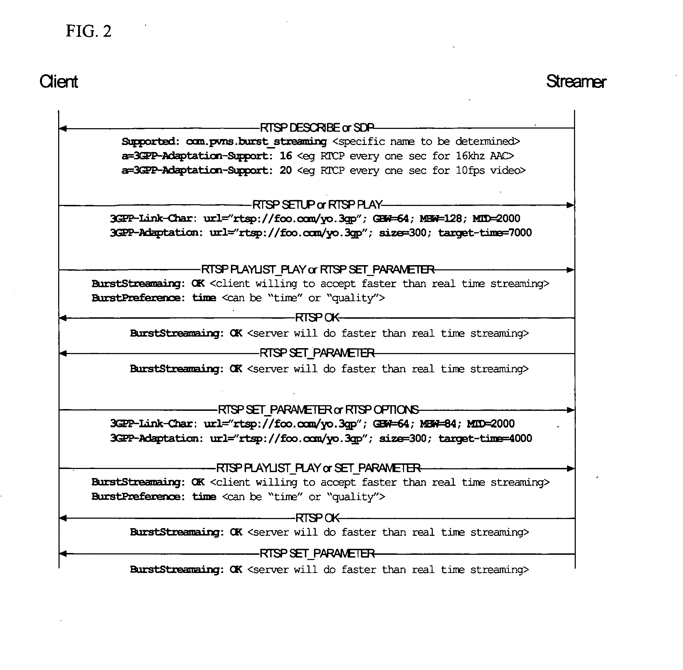

FIG. 2 shows an embodiment of information exchange conducted between a server and client in accordance with 3GPP PSS release 6 mechanisms in combination with pvNS playlist protocol extensions, which is exchanged for the purpose of enabling data corresponding to a playlist selection to be streamed at a faster than real time streaming data rate. The text in bold letters shows actual information communicated between the client and the server. The text in "< >" markers provides explanatory information regarding the actual information communicated between the client and the server.

In order for a server to be able to stream faster than real time, the server needs to know certain information. At a minimum, the server needs to know what is the current size of a client jitter buffer (i.e., the jitter buffer size) and it needs to know what the maximum data transfer rate at which the client can receive data or at which a network over which data is transmitted to the client can transmit such data. Additionally, the server generally also needs to know whether the client desires implementation of faster than real time streaming. In the context of playlists, the need to know whether the client desires implementation of faster than real time streaming exists because the assumption is that the client can discard residual jitter buffer data before the new, faster than real time streaming data replaces it. Hence, the reason for the 'BurstStreaming' signal in FIG. 2. It should be noted that the term 'BurstStreaming' is not an industry standard term but rather a term defined herein relating to the functionality of performing faster than real time streaming in or not in the context of playlists.

As mentioned above, knowing the jitter buffer size and the maximum data transfer rate is necessary for implementation of faster than real time streaming. In FIGS. 1 and 2, the jitter buffer size and the maximum data transfer rate are signalled via the 3GPP-Link-Char and 3GPP-Adaptation headers in RTSP (Real-Time Streaming Protocol). This is a standard information exchange approach for clients compliant to 3GPP PSS release 6.

Once the server knows the jitter buffer size (i.e., that the jitter buffer is empty) and the maximum data transfer rate, it is ready to perform faster than real time streaming. The desire to perform such faster than real time streaming takes two forms in the above figures. In FIG. 1, desire is signalled by the fact that the RTCP (Real-Time Transport Control Protocol) packet has its Playout Delay set to 0. A Playout Delay set to 0 refers to the size of the jitter buffer being 0 (i.e., empty). Thus, the client is telling the server that the jitter buffer is empty and that the server should proceed with faster than real time streaming (i.e., burst_streaming). In FIG. 2, the jitter buffer size and the maximum data transfer rate are signalled to the server via the BurstStreaming attribute in a PLAYLIST_PLAY or SET_PARAMETER.

A client needs to know that the server is going to do proceed with faster than real time streaming (i.e., burst_streaming). Accordingly, in FIG. 2, the server responds with its own BurstStreaming signal. In FIG. 1, the client will not know whether the server is going to do proceed with faster than real time streaming. Thus, in the information exchange embodiment of FIG.1, the client must internally detect whether faster than real time streaming is proceeding or not.

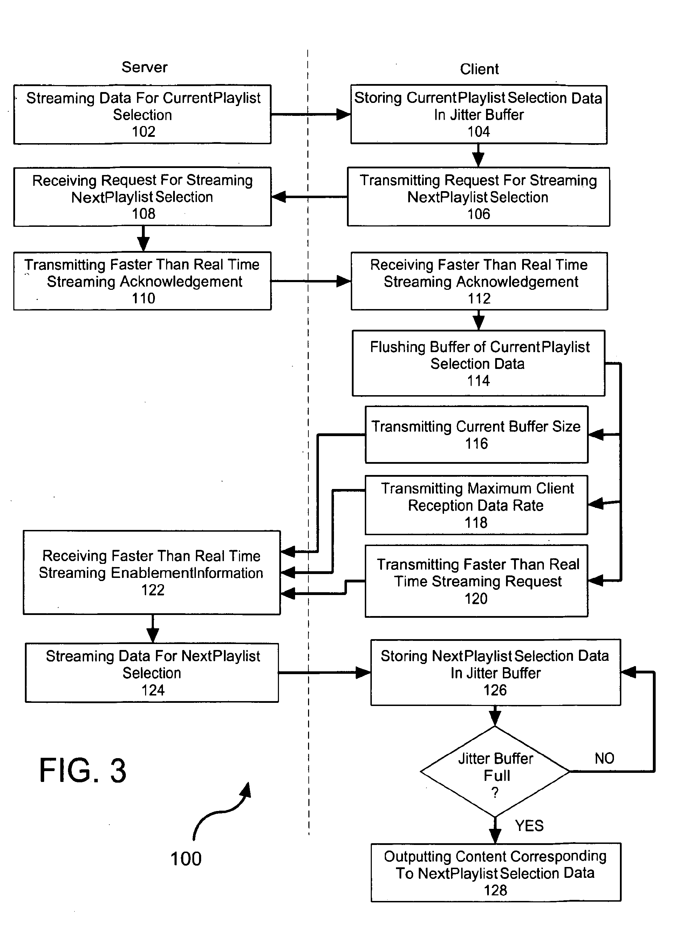

FIG. 3 shows an embodiment of a method for facilitating multimedia streaming using playlists in accordance with the present invention, which is referred to herein as the method 100. The method 100 starts with an operation 102 for streaming data corresponding to a current playlist selection from a server that supports server-side playlists for reception by a client. An operation 104 is performed for storing the data corresponding to a current playlist selection within a jitter buffer of the client in response the client receiving the data corresponding to a current playlist selection. At some point in time while data corresponding to a current playlist selection is stored in the jitter buffer, an operation 106 is performed for transmitting from the client for reception by the server a request for streaming multimedia content corresponding to a different playlist selection. After an operation 108 is performed by the server for receiving the request for streaming multimedia content corresponding to the different playlist selection, an operation 110 is performed for transmitting from the server for reception by the client information acknowledging that the server supports faster than real-time streaming.

In response to the client performing an operation 112 for receiving acknowledgment that the server supports faster than real-time streaming, the client performs an operation 114 for flushing the jitter buffer of data corresponding to a current playlist selection. After flushing the data corresponding to a current playlist selection from the jitter buffer, the client performs an operation 116 for transmitting a current buffer size to the server (i.e., a buffer size of 0 corresponding to an empty buffer) for reception by the server, an operation 118 for transmitting a maximum client reception data rate for reception by the server and an operation 120 for transmitting a faster than real time streaming request for reception by the server, which jointly constitute faster than real time streaming enablement information. In response to the server performing an operation 122 for receiving the faster than real time streaming enablement information, the server performs an operation 124 for streaming data corresponding to the next playlist selection for reception by the client. Correspondingly, the client performs an operation 126 for storing the data corresponding to a next playlist selection within the jitter buffer of the client. In response to the jitter buffer being full of data corresponding to a next playlist selection, the client performs an operation 128 for outputting content corresponding to the data corresponding to the next playlist selection (i.e., the next playlist selections can be presented).

In an alternate embodiment of the present invention, a technique referred to herein as Early Decode is implemented for triggering the operation 128 for outputting content corresponding to the data corresponding to the next playlist selection. Early Decoding refers is a technique for implementing playback of data corresponding to the next playlist selection whereby the client can begin extracting data from the jitter buffer even before the jitter buffer becomes full. In accordance with the present invention, data is being streamed into the jitter buffer at a faster than real data transmission rate (i.e., faster than the content presentation rate). Thus, because the client knows faster than real time streaming is happening (i.e., burst streaming), the client can start decoding and presenting data to the end user even before the jitter buffer is full. Furthermore, the client can be sure that the jitter buffer is still guaranteed to increase in fullness, albeit at a slower rate than if it did not take data out, even if the client starts taking data out of the jitter buffer at the presentation rate (i.e., decode rate) prior to the buffer becoming full. Accordingly, the technique of Early Decoding significantly reduces the amount of delay associated with switching between playlist selections.

In implementation of the Early Decoding technique, the streaming server generally must know exactly at what point the client will begin playing back data. For example, if the jitter buffer holds 7 seconds of data, the client may begin decoding and presenting when only 2 seconds of data are in the jitter buffer. If this happens, the streaming server must change the amount of data it burst streams in order to guarantee that a full jitter buffer is the result after all bursting has finished. Although not shown in FIGS. 1-3, additional signalling can be used by the client to specify an Early Decode value that the streamer server can use to calculate the appropriate amount of burst streaming. Alternatively, the client can modify what it tells the streaming server is jitter buffer size (i.e., an effective jitter buffer size) in order to compensate for Early Decoding. More specifically, the client can still use only the signalling disclosed above in reference to FIGS. 1-3, but the jitter buffer size will not be the real jitter buffer size because the streaming server needs to know the effective jitter buffer size as opposed to the real jitter buffer size.

Referring now to instructions processible by a data processing device, it will be understood from the disclosures made herein that methods, processes and/or operations adapted for carrying out faster than real time streaming functionality as disclosed herein are tangibly embodied by computer readable medium having instructions thereon that are configured for carrying out such functionality. In one specific embodiment, the instructions are tangibly embodied for carrying out information exchange as disclosed above in FIG. 1. In one specific embodiment, the instructions are tangibly embodied for carrying out information exchange as disclosed above in FIG. 2. In still another specific embodiment, the instructions are tangibly embodied for carrying out the method 100 disclosed above in FIG. 3. The instructions are accessible by one or more data processing devices from a memory apparatus (e.g. RAM, ROM, virtual memory, hard drive memory, etc), from an apparatus readable by a drive unit of a data processing system (e.g., a diskette, a compact disk, a tape cartridge, etc) or both. Accordingly, embodiments of computer readable medium in accordance with the presenting invention include a compact disk, a hard drive, RAM or other type of storage apparatus that has imaged thereon a computer program (i.e., instructions) adapted for carrying out faster than real time streaming functionality in accordance with the present invention.

The following features, separately or in any combination, may also consitute advantageous embodiments of the described or claimed invention:
- The claimed and/or described method wherein the current size of the jitter buffer corresponds to the jitter buffer being empty.
- The claimed and/or described method wherein a target data transfer rate at which said streaming data corresponding to the different playlist selection is performed is equal to the maximum data rate at which data is receivable by the client.
- The claimed and/or described method, further comprising: flushing data corresponding to a current playlist selection from the jitter buffer in response to said streaming of data corresponding to the different playlist selection being performed, wherein the current size of the jitter buffer corresponds to the jitter buffer being empty.
- The claimed and/or described server wherein said instructions are configured for enabling said at least one data processing device to facilitate: transmitting from the server for reception by the client a command causing the client to flush data corresponding to a current playlist selection from the jitter buffer, wherein the command is transmitted after the server receives the request for streaming multimedia content corresponding to a different playlist selection.
- The claimed and/or described server wherein the current size of the jitter buffer corresponds to the jitter buffer being empty.
- The claimed and/or described server wherein a target data transfer rate at which said streaming data corresponding to the different playlist selection is performed is equal to the maximum data rate at which data is receivable by at least one of the client and a network over which data is transmitted to the client.
- The claimed and/or described server wherein said instructions are configured for enabling said at least one data processing device to facilitate: receiving at the server information designating that the client desires data to be streamed at a faster than real-time streaming data rate, wherein said receiving said information designating that the client desires data to be streamed at a faster than real-time streaming data rate is performed prior to said streaming data corresponding to the different playlist selection being performed.
- The claimed and/or described server wherein said instructions are configured for enabling said at least one data processing device to facilitate: transmitting from the server for reception by the client a command causing the client to flush data corresponding to a current playlist selection from the jitter buffer, wherein the command is transmitted after the server receives the request for streaming multimedia content corresponding to a different playlist selection.
- The claimed and/or described server wherein a target data transfer rate at which said streaming data corresponding to the different playlist selection is performed is equal to the maximum data rate at which data is receivable by the client.

In the preceding detailed description, reference has been made to the accompanying drawings that form a part hereof, and in which are shown by way of illustration specific embodiments in which the present invention may be practiced. These embodiments, and certain variants thereof, have been described in sufficient detail to enable those skilled in the art to practice embodiments of the present invention. It is to be understood that other suitable embodiments may be utilized and that logical, mechanical, chemical and electrical changes may be made without departing from the spirit or scope of such inventive disclosures. For example, some or all of the advantageous and beneficial results of the present invention will be exhibited even in view of variations in signalling and operational implementations as disclosed above. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A method for facilitating multimedia streaming using playlists, comprising:
streaming data corresponding to a current playlist selection from a server that supports server-side playlists to a client having a jitter buffer;
receiving at the server a request for streaming multimedia content corresponding to a different playlist selection to the client;
communicating client-server specification information between the server and the client for enabling said data corresponding to the different playlist selection to be streamed from the server to the client at a data transfer rate greater than a maximum data presentation rate, wherein said communicating includes transmitting from the server for reception by the client information acknowledging that the server supports faster than real-time streaming and receiving at the server information designating a current size of the jitter buffer and a maximum data rate at which data is receivable by the client; and
streaming from the server for reception by the client said data corresponding to the different playlist selection after said communicating client-server specification information is performed, wherein said data corresponding to the different playlist selection is streamed at a data transfer rate greater than the maximum data transfer rate at which data is outputable from the jitter buffer.

2. The method of claim 1, further comprising:
transmitting from the server for reception by the client a command causing the client to flush data corresponding to a current playlist selection from the jitter buffer, wherein the command is transmitted after the server receives the request for streaming multimedia content corresponding to a different playlist selection.

3. The method of claim 1 wherein the current size of the jitter buffer corresponds to the jitter buffer being empty.

4. The method of claim 1 wherein a target data transfer rate at which said streaming data corresponding to the different playlist selection is performed is equal to the maximum data rate at which data is receivable by the client.

5. The method of claim 1, further comprising:
receiving at the server information designating that the client desires data to be streamed at a faster than real-time streaming data rate,
wherein said receiving said information designating that the client desires data to be streamed at a faster than real-time streaming data rate is performed prior to said streaming data corresponding to the different playlist selection being performed.

6. The method of claim 5, further comprising:
transmitting from the server for reception by the client a command causing the client to flush data corresponding to a current playlist selection from the jitter buffer, wherein the command is transmitted after the server receives the request for streaming multimedia content corresponding to a different playlist selection.

7. The method of claim 6 wherein a target data transfer rate at which said streaming data corresponding to the different playlist selection is performed is equal to the maximum data rate at which data is receivable by the client.

8. The method of claim 7, further comprising:
flushing data corresponding to a current playlist selection from the jitter buffer, wherein said flushing is performed in response to one of:
the client receiving a command transmitted from the server causing the client to flush data corresponding to a current playlist selection from the jitter buffer; and
the client detecting that faster than real-time streaming of said data corresponding to the different playlist selection is occurring.

9. A method for facilitating multimedia streaming using playlists, comprising:
streaming data corresponding to a current playlist selection from a server that supports server-side playlists for reception by a client;
storing said data corresponding to a current playlist selection within a jitter buffer of the client in response the client receiving said data corresponding to a current playlist selection;
transmitting from the client for reception by the server a request for streaming multimedia content corresponding to a different playlist selection;
transmitting from the server for reception by the client information acknowledging that the server supports faster than real-time streaming after the request for streaming multimedia content corresponding to the different playlist selection is received by the server;
transmitting from the client for reception by the server information designating a current size of the jitter buffer, a maximum data presentation rate at which data is outputable from the jitter buffer and acknowledgment that the client desires data to be streamed at a faster than real-time streaming data rate, wherein said information transmitted from the client is transmitted in response to said information acknowledging that the server supports faster than real-time streaming being received by the client;
streaming from the server for reception by the client said data corresponding to the different playlist selection in response to said information transmitted from the client being received by the server, wherein said streaming data corresponding to the different playlist selection is performed at a data transfer rate greater than the maximum data transfer rate at which data is outputable from the jitter buffer; and
extracting data corresponding to the different playlist selection from the jitter buffer for enabling playback of said data corresponding to the next playlist selection, wherein said extracting is performed prior to the jitter buffer becoming full of said data corresponding to the next playlist selection and in response to the client detecting that said data corresponding to the next playlist selection is being received by the jitter buffer at a data transfer rate greater than the maximum data transfer rate at which data is outputable from the jitter buffer.

10. The method of claim 9, further comprising:
flushing data corresponding to a current playlist selection from the jitter buffer, wherein said flushing is performed in response to one of:
the client receiving a command transmitted from the server causing the client to flush data corresponding to a current playlist selection from the jitter buffer; and
the client detecting that faster than real-time streaming of said data corresponding to the different playlist selection is occurring.

11. A server that supports server-side playlists, comprising:
at least one data processing device;
instructions processable by said at least one data processing device; and
an apparatus from which said instructions are accessible by said at least one data processing device;
wherein said instructions are configured for enabling said at least one data processing device to facilitate:
streaming data corresponding to a current playlist selection from a server that supports server-side playlists to a client having a jitter buffer;
receiving at the server a request for streaming multimedia content corresponding to a different playlist selection to the client;
communicating client-server specification information between the server and the client for enabling said data corresponding to the different playlist selection to be streamed from the server to the client at a data transfer rate greater than a maximum data presentation rate, wherein said communicating includes transmitting from the server for reception by the client information acknowledging that the server supports faster than real-time streaming and receiving at the server information designating a current size of the jitter buffer and a maximum data rate at which data is receivable by the client; and
streaming from the server for reception by the client said data corresponding to the different playlist selection after said communicating client-server specification information is performed, wherein said data corresponding to the different playlist selection is streamed at a data transfer rate greater than the maximum data transfer rate at which data is outputable from the jitter buffer.
